(19) Europäisches Patentamt / European Patent Office / Office européen des brevets

(11) **EP 3 642 378 B1**

(12) **FASCICULE DE BREVET EUROPEEN**

(45) Date de publication et mention
de la délivrance du brevet:
**02.08.2023 Bulletin 2023/31**

(21) Numéro de dépôt: **18735678.7**

(22) Date de dépôt: **14.06.2018**

(51) Classification Internationale des Brevets (IPC):
***C22F 1/057*** *(2006.01)* ***B24B 39/00*** *(2006.01)*
***B23P 9/00*** *(2006.01)*

(52) Classification Coopérative des Brevets (CPC):
**B24B 39/006; B23P 9/04; B24B 29/005;
B24B 39/06; C22C 21/12; C22F 1/057**

(86) Numéro de dépôt international:
**PCT/FR2018/051421**

(87) Numéro de publication internationale:
**WO 2018/234663 (27.12.2018 Gazette 2018/52)**

(54) **PROCÉDÉ DE FABRICATION DES TOLES MINCES EN ALLIAGE D'ALUMINIUM-CUIVRE-LITHIUM POUR LA FABRICATION DE FUSELAGE D'AVION**

HERSTELLUNGSVERFAHREN FÜR DÜNNE BLECHE AUS ALUMINIUM-KUPFER-LITHIUM-LEGIERUNG FÜR DIE HERSTELLUNG EINES FLUGZEUGRUMPFES

PRODUCTION METHOD OF THIN SHEETS MADE OF ALUMINIUM-COPPER-LITHIUM ALLOY FOR AIRCRAFT FUSELAGE MANUFACTURE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.06.2017 FR 1755582**

(43) Date de publication de la demande:
**29.04.2020 Bulletin 2020/18**

(73) Titulaire: **Constellium Issoire
63500 Issoire (FR)**

(72) Inventeurs:
• **DAVO GUTIERREZ, Maria Belen
Canton, Michigan 48187 (US)**
• **PEGUET, Lionel
38950 Quaix en Chartreuse (FR)**
• **SAFRANY, Jean-Sylvestre
38500 Voiron (FR)**
• **EBERL, Frank
63500 Issoire (FR)**
• **BRET, Thibaud
63500 Issoire (FR)**

(74) Mandataire: **Constellium - Propriété Industrielle
C-TEC Constellium Technology Center
Propriété Industrielle
Parc Economique Centr'Alp
725, rue Aristide Bergès
CS10027
38341 Voreppe (FR)**

(56) Documents cités:
**WO-A1-2013/054013 DE-A1-102010 043 285
US-A- 5 791 009 US-A1- 2009 029 631**

• **NAZIHA SIDHOM ET AL: "Effects of Brushing and
Shot-Peening Residual Stresses on the Fatigue
Resistance of Machined Metal Surfaces:
Experimental and Predicting Approaches",
MATERIALS SCIENCE FORUM, vol. 681, 1 mars
2011 (2011-03-01), pages 290-295, XP055459173,
DOI: 10.4028/www.scientific.net/MSF.681.290**

EP 3 642 378 B1

## Description

### Domaine de l'invention

La présente invention concerne en général les produits laminés brossés en alliage 2XXX à base d'aluminium comprenant du lithium, plus particulièrement, de tels produits utiles dans l'industrie aéronautique et spatiale appropriés pour une utilisation dans des applications de fuselage. L'invention concerne également les procédés de fabrication de tels produits.

### Etat de la technique

Des produits laminés en alliage d'aluminium sont développés pour produire des éléments de fuselage destinés notamment à l'industrie aéronautique et à l'industrie spatiale.

Les alliages Al-Cu-Li sont particulièrement intéressants pour fabriquer ce type de produit car ils offrent des compromis de propriétés généralement plus élevés que les alliages conventionnels, notamment en termes de compromis entre la fatigue, la tolérance au dommage et la résistance mécanique.

La demande de brevet WO2013/054013 décrit le procédé de fabrication d'un produit laminé, en particulier pour l'industrie aéronautique, contenant un alliage d'aluminium ayant une composition de 2,1 à 3,9% en poids de Cu, 0,7 à 2,0% en poids de Li, 0,1 à 1,0% en poids de Mg , 0 à 0,6% en poids d'Ag, 0 à 1% en poids de Zn, au plus 0,20% en poids de Fe + Si, au moins un élément choisi parmi Zr, Mn, Cr, Se, Hf et Ti, la quantité dudit élément, si sélectionné, de 0,5 à 0,18% en poids pour Zr, de 0,1 à 0,6% en poids pour Mn, de 0,05 à 0,3% en poids pour Cr, de 0,02 à 0,2% en poids pour Se, de 0,05 à 0,5% en poids pour Hf et de 0,01 à 0,15% en poids % pour Ti, les autres éléments représentant au plus 0,05% en poids chacun et 0,15% en poids total, le reste étant de l'aluminium, ledit procédé comprenant un planage et/ou une traction avec une déformation totale d'au moins 0,5% et inférieure à 3%, et traitement thermique court dans lequel la tôle atteint une température comprise entre 130 et 170°C pendant 0,1 à 13 heures. Le compromis avantageux des propriétés des produits corroyés en alliage Al-Cu-Li permet en particulier de réduire l'épaisseur de ces produits, maximisant ainsi plus encore la réduction de poids qu'ils apportent. Les contraintes courantes s'en trouvent cependant augmentées, induisant alors des risques plus élevés d'initiation de fissures de fatigue. Il est donc intéressant d'améliorer la résistance à la fatigue des produits en alliage Al-Cu-Li, notamment celles des produits anodisés tels que les tôles de fuselage.

L'article de Nazida Sidhom et al intitulé « Effects of Brushing and Shot-Peening Residual Stresses on the Fatigue Résistance of Machined Métal Surfaces : Experimental and predicting Approaches », Materials Science Forum vol. 681, pp 290-295 (2011), décrit le brossage mécanique linéaire de tôles en alliage AA5083H11 et son effet sur les contraintes en compression, la rugosité et la performance en fatigue.

La demande WO 2013/054013 décrit un procédé de fabrication d'un produit laminé, notamment pour l'aéronautique, contenant un alliage d'aluminium ayant une composition de 2,1 à 3,9% en poids de Cu, 0,7 à 2,0% en poids de Li, 0,1 à 1,0% en poids de Mg , 0 à 0,6% en poids d'Ag, 0 à 1% en poids de Zn, au plus 0,20% en poids de Fe + Si, au moins un élément choisi parmi Zr, Mn, Cr, Se, Hf et Ti, la quantité dudit élément, si sélectionné, 0,5 à 0,18% en poids pour Zr, 0,1 à 0,6% en poids pour Mn, 0,05 à 0,3% en poids pour Cr, 0,02 à 0,2% en poids pour Se, 0,05 à 0,5% en poids pour Hf et 0,01 à 0,15 en poids % pour Ti, les autres éléments constituant au plus 0,05% en poids chacun et 0,15% en poids au total, le reste étant de l'aluminium, ladite méthode consistant à aplatir et / ou à tirer avec une déformation totale d'au moins 0,5% et inférieure à 3%, et un traitement thermique court dans lequel la tôle atteint une température comprise entre 130 et 170°C pendant 0,1 à 13 heures. L'invention permet notamment de simplifier le procédé de mise en forme de tôles pour fuselages et d'améliorer le compromis entre résistance mécanique statique et propriétés de tolérance aux dommages.

La demande de brevet US2009/029631 décrit un procédé et appareil pour conditionner une surface métallique présentant typiquement des contours de surface irréguliers, en frottant la surface métallique avec un dispositif de conditionnement de surface comportant une pluralité de poils qui sont en contact avec la surface métallique pendant le frottement et réduisent la contrainte de traction ou la couche dégradée de la surface métallique.

La demande de brevet DE102010043285 décrit le traitement d'un composant dans lequel au moins une partie de la surface du composant est bombardée avec un agent pour générer des contraintes de compression résiduelles, le milieu de projection comprenant un liquide et des particules conçues de telle sorte que, lorsque la surface du composant est irradiée, essentiellement l'état de contrainte résiduelle du composant est modifié.

Le brevet US5791009 décrit un procédé de fabrication dans lequel des contraintes résiduelles sont intentionnellement imposées à la surface de travail inférieure et / ou à la surface de montage supérieure d'une lame de truelle. Des contraintes peuvent être imposées, par exemple, par le grenaillage de perles de verre, le grenaillage, le laminage et / ou le brossage de la lame de truelle métallique.

D'autre part, lors de la fabrication de tels produits, il est important de tenir compte des contraintes auxquelles sont soumis les produits semi-finis transitant du fabricant à l'avionneur. Lors d'un tel transit, les produits semi-finis sont généralement non anodisés et soumis parfois à des conditions de température et d'humidité extrêmes. Ils peuvent par ailleurs être stockés sur de très longues durées. Malgré ces conditions, il est important pour le fabricant de pouvoir garantir un maintien des propriétés des produits semi-finis, notamment un aspect de surface satisfaisant, en particulier en termes de corrosion de surface. Les produits semi-finis en alliages Al-Cu-Li, plus encore les alliages Al-Cu-Li-Mg, présentent une tendance plus particulière à réagir lorsqu'ils sont stockés sur de très longues durées dans des conditions de température et d'humidité extrêmes.

## Objet de l'invention

Il existe un besoin pour des produits en alliage aluminium-cuivre-lithium présentant des propriétés améliorées par rapport à celles des produits connus, en particulier en termes de résistance à la fatigue, de propriétés de résistance mécanique statique et de résistance à la corrosion, tout en ayant une faible densité. Par ailleurs il existe un besoin pour un procédé simple et économique d'obtention de ces tôles minces.

L'invention suggère dans ce but un procédé de fabrication d'un produit laminé brossé en alliage Al-Cu-Li selon la revendication 1.

## Description des figures

La Figure 1 est le schéma des éprouvettes utilisées pour les essais en fatigue lisse. Les dimensions sont données en mm.

La Figure 2 montre schématiquement différents types de brossage : figure 2a le brossage linéaire, figure 2b le brossage circulaire et linéaire, figure 2c le brossage circulaire et orbital.

## Description de l'invention

Sauf mention contraire, toutes les indications concernant la composition chimique des alliages sont exprimées comme un pourcentage en poids basé sur le poids total de l'alliage. L'expression 1,4 Cu signifie que la teneur en cuivre exprimée en % en poids est multipliée par 1,4. La désignation des alliages se fait en conformité avec les règlements de The Aluminium Association, connus de l'homme du métier. Lorsque la concentration est exprimée en ppm (parts per million), cette indication se réfère également à une concentration massique.

Sauf mention contraire, les définitions des états métallurgiques indiquées dans la norme européenne EN 515 (1993) s'appliquent.

Sauf mention contraire, les définitions de la norme EN 12258 s'appliquent.

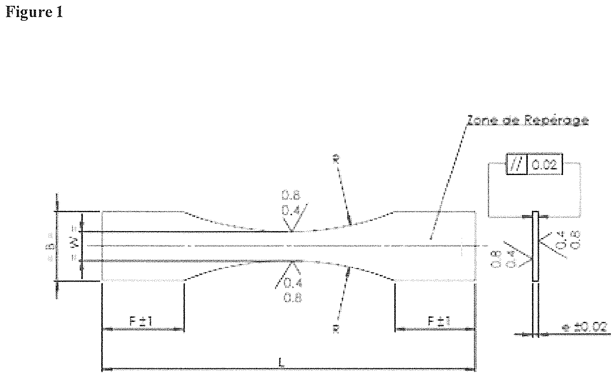

Les propriétés en fatigue sur éprouvettes lisses sont mesurées à l'air ambiant pour des niveaux de contrainte variables, à une fréquence de 40 Hz, un rapport de contrainte $R = 0,1$, sur des éprouvettes telles que représentées sur la Figure 1, $K_t = 1$, prélevées pleine épaisseur dans les tôles dans la direction T-L.

Les propriétés en fatigue sont évaluées par détermination de la valeur de contrainte moyenne $\sigma_A$ de rupture à 100 000 cycles.

Pour ce faire, une valeur de contrainte $\sigma_{max}$ est déterminée pour chaque tôle testée en réalisant un test de fatigue en escalier avec contrainte croissante (+ 20 MPa pour chaque palier de non-rupture à 100 000 cycles). Ainsi, on réalise un premier test de fatigue à une contrainte $\sigma_x$, si l'éprouvette ne casse pas après 100 000 cycles, le test continu avec une contrainte $\sigma_x + 20$ MPa. La contrainte $\sigma_{max}$ correspond à la contrainte $\sigma_x + (n*20)$, en MPa, à laquelle a lieu la rupture.

Pour chaque tôle, trois essais de fatigue sont ainsi réalisés à la valeur de contrainte $\sigma_{max}$ précédemment déterminée. L'équation de Walker est utilisée pour déterminer une valeur de contrainte $\sigma_a$ de rupture à 100 000 cycles :

$$\sigma_a = \sigma_{max} \left( \frac{N_0}{N} \right)^{1/n}$$

où $\sigma_{max}$ est la contrainte maximale appliquée à un échantillon donné, N est le nombre de cycles jusqu'à la rupture, $N_0$ est égale à 100 000 et $n = -4,5$.

Pour une tôle donnée, la valeur de contrainte moyenne $\sigma_A$ de rupture à 100 000 cycles correspond à la moyenne de trois valeurs de contrainte $\sigma_a$.

Dans le cadre de l'invention, deux paramètres de rugosité mesurés selon la norme NF EN ISO 4287 sont utilisés :

- Rz : hauteur maximale du profil de rugosité,
- Ra : écart moyen de rugosité soit la moyenne arithmétique de toutes les ordonnées du profil sur la longueur d'évaluation.

Ces paramètres sont évalués dans le cadre de la présente invention dans les directions L et T des tôles par une méthode d'interférométrie optique (61 profils extraits dans les directions L et T, les paramètres Ra et Rz sont représentatifs de 90 % de la surface analysées p=0.90).

Les contraintes résiduelles en surface sont évaluées par diffraction aux rayons X à l'aide d'un diffractomètre équipé avec un détecteur linéaire et un montage $\omega$. Les paramètres de mesure utilisés sont :

_ radiation Cr-K$\alpha$ ;
_ plans cristallographiques des phases d'aluminium {311} ;
_ angle de diffraction $2\Theta_0$=139.31°.

Les analyses sont effectuées dans la direction transversale, moins affectée par la texture cristallographique de l'échantillon. Le logiciel de post-traitement StressAT a été utilisé, en prenant en compte une incertitude de +/- 2 écart-types. Les constantes radiocristallographiques utilisées pour le calcul de contraintes résiduelles sont $S_1$[MPa]=-5.11*10-6, et 1/2$S_2$ [MPa]=19.54*10-6.

L'évaluation des contraintes résiduelles a été réalisée 0, 5, 10, 20 et 50 $\mu$m de profondeur de l'extrême surface des échantillons. Pour les analyses de 5 à 50 $\mu$m de l'extrême surface, un enlèvement de matière successif est réalisé par voie chimique (NaOH) afin de ne pas introduire de nouvelles contraintes résiduelles.

Les présents inventeurs ont constaté que, de manière surprenante, il est possible d'obtenir un produit laminé en alliage Al-Cu-Li d'épaisseur inférieure à 12 mm présentant à la fois une meilleure résistance à la corrosion de surface et des propriétés de résistance en fatigue équivalentes ou même améliorées, et ceci même lorsque ledit produit est ultérieurement anodisé, en réalisant à l'issue du procédé de fabrication dudit produit laminé une étape de brossage tout à fait particulière. L'étape de brossage est notamment caractérisée par des paramètres spécifiques et critiques en termes d'épaisseur de produit éliminée, de force appliquée lors du brossage et d'orientation de l'axe de rotation.

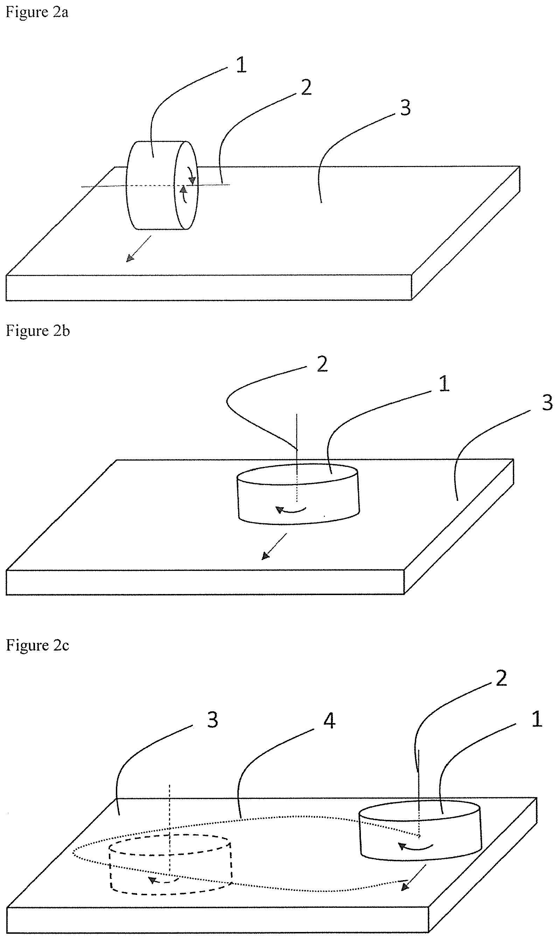

On distingue plusieurs méthodes de brossage qui sont décrites dans les figures 2a à 2c. La figure 2a représente schématiquement le brossage dit linéaire. Dans ce type de brossage une brosse 1 tourne autour d'un axe de rotation 2 parallèle au plan brossé 3 et se déplace linéairement par rapport à ce plan. Typiquement, la tôle est mobile et la brosse est fixe.

La figure 2b représente schématiquement le brossage dit circulaire linéaire. Dans ce type de brossage une brosse 1 tourne autour d'un axe de rotation 2 perpendiculaire au plan brossé 3 et se déplace linéairement par rapport à ce plan. Typiquement, la tôle est mobile et la brosse est fixe.

La figure 2c représente schématiquement le brossage dit circulaire orbital. Dans ce type de brossage une brosse 1 tourne autour d'un axe de rotation 2 perpendiculaire au plan brossé 3 et se déplace en décrivant une orbite 4 par rapport à ce plan, tout en progressant par rapport à la surface de la tôle. L'orbite est typiquement une ellipse. Typiquement, la tôle est mobile et la brosse est fixe.

Ainsi dans le brossage de type circulaire, l'axe de rotation autour duquel tourne la brosse est perpendiculaire au plan brossé.

Dans un mode de réalisation du procédé selon l'invention, on élabore un produit laminé en alliage Al-Cu-Li, ledit produit laminé est ultérieurement mis en solution et trempé, détensionné préférentiellement par traction et optionnellement revenu. Le bain de métal liquide comprend de manière préférée 2 à 4% en poids de Cu, préférentiellement de 2,2 à 3,6 % en poids de Cu, et plus préférentiellement encore de de 2,6 à 3,4% en poids de Cu. L'alliage Al-Cu-Li selon l'invention comprend avantageusement de 0,1% en poids de Li et préférentiellement jusqu'à 3% en poids de Li, préférentiellement de 0,5 à 1,1 % en poids de Li.

Dans un autre mode de réalisation, le bain de métal liquide comprend de manière préférée de 2,0 à 3,0 % en poids de Cu, et préférentiellement de 2,3 à 2,7% en poids de Cu et de 1,0 à 2,0 % en poids de Li et préférentiellement de 1,3 à 1,6 % en poids de Li. Optionnellement, le bain de métal liquide comprend également :

jusqu'à 0,5% en poids d'Ag, préférentiellement de 0,1 à 0,4 % en poids de Ag,
jusqu'à 2% en poids de Mg, préférentiellement de 0,2 à 0,8 % en poids de Mg,
au moins un élément choisi parmi Zr et Ti et, s'il est choisi, préférentiellement de 0,11 à 0,20 % en poids de Zr et 0,01 à 0,15 % en poids de Ti,
optionnellement au moins un élément choisi parmi Mn, V, Cr, Sc, et Hf, la quantité de l'élément, s'il est choisi, étant de 0,01 à 0,8 % en poids pour Mn, 0,05 à 0,2 % en poids pour V, 0,05 à 0,3 % en poids pour Cr, 0,02 à 0,3 % en poids pour Sc, 0,05 à 0,5 % en poids pour Hf,

une quantité de Zn inférieure à 0,6 % en poids, une quantité de Fe et de Si inférieure ou égale à 0,1 % en poids chacun, et des impuretés inévitables à une teneur inférieure ou égale à 0,05% en poids chacune et 0,15% en poids au total.

Selon un mode de réalisation tout à fait particulier, l'alliage du bain de métal liquide est un alliage AA2198.

Le bain de métal liquide est coulé sous forme d'une plaque. La plaque est homogénéisée préférentiellement à une température comprise entre 450°C et 515 °C puis laminée à chaud en une tôle ayant une épaisseur inférieure ou égale à 12 mm. Optionnellement, la tôle est également laminée par laminage à froid en une tôle mince ayant une épaisseur finale comprise entre 0,2 et 6 mm, préférentiellement entre 0,5 et 3,3 mm, la réduction d'épaisseur réalisée par laminage à froid étant comprise entre 1 et 3,5 mm. La tôle est ensuite mise en solution, préférentiellement à une température comprise entre 450 °C et 515 °C puis trempée. La tôle mise en solution et trempée est détensionnée. Optionnellement, le détensionnement est réalisé par traction et de manière préférée, la traction est réalisée de façon contrôlée avec une déformation permanente de 0,5 à 5 %. Selon un mode de réalisation, la tôle détensionnée est soumise à un revenu préférentiellement à une température comprise entre 130 et 170°C et plus préférentiellement encore entre 150 et 160°C pendant 5 à 100 heures, avantageusement de 10 à 40h.

A l'issue du procédé de fabrication qui comprend en particulier au moins une étape à une température supérieure à environ 400°C, la surface de la tôle en alliage Al-Cu-Li comprend une couche d'oxydes supérieure à 100 nm (0,1 $\mu$m), typiquement supérieure à 1 voire 2 $\mu$m comprenant du lithium, de l'oxygène, du carbone et selon la composition de l'alliage du magnésium.

A l'issue du procédé de fabrication, le produit est soumis à une étape de brossage tout à fait particulière, adaptée spécifiquement aux produits en alliages Al-Cu-Li. Le brossage est réalisé à l'aide d'un outil de brossage tel qu'il :

_ génère des contraintes résiduelles de compression en surface dudit produit ;

_ élimine une épaisseur au moins égale à 9 $\mu$m de la surface du produit laminé non brossé ; et dans lequel l'étape de brossage comprend au moins un brossage de type circulaire.

Au sens de l'invention, on entend par « contraintes résiduelles de compression superficielles ou de surface », des contraintes résiduelles substantiellement dans le plan de la surface, ces contraintes affectant le produit de l'extrême surface (0 $\mu$m par rapport à la surface du produit) et jusqu'à -50 $\mu$m, préférentiellement -30 $\mu$m, plus préférentiellement encore -20 $\mu$m de l'extrême surface ou même -10 $\mu$m de l'extrême surface. Selon la force appliquée sur le produit lors du brossage les contraintes résiduelles de compression peuvent affecter le produit sur une moindre épaisseur.

Le produit laminé ainsi brossé présente une couche d'oxydes inférieure à 1 $\mu$m, préférentiellement inférieure à 0,4 $\mu$m et plus préférentiellement encore inférieure à 0,2 $\mu$m comprenant majoritairement de l'oxygène et de l'aluminium. Dans la présente demande, on entend par « majoritairement de l'oxygène et de l'aluminium » des oxydes comprenant plus de 70% en poids, préférentiellement plus de 85% en poids, plus préférentiellement encore plus de 90% en poids ou même plus de 95% en poids.

Avantageusement, la force appliquée sur le produit laminé lors de l'étape de brossage génère des contraintes résiduelles de compression jusqu'à une épaisseur d'au moins 5 $\mu$m, préférentiellement d'au moins 10 $\mu$m de l'extrême surface du produit à l'état brossé. Les présents inventeurs ont constaté que les produits soumis à une telle force lors de l'étape de brossage présentent en particulier des propriétés de fatigue améliorées par rapport à des produits non brossés et ceci même lorsque les produits brossés sont par la suite anodisés, notamment soumis à une anodisation chromique typique de l'industrie aéronautique qui est susceptible de générer une épaisseur de couche anodique proche d'environ 1 $\mu$m.

Selon un mode de réalisation, la force appliquée sur le produit laminé lors de l'étape de brossage est telle que :

_ à l'extrême surface, L.I. (brossé) - L.I. (non brossé) > 0,2°, préférentiellement > 0,3° et plus préférentiellement encore > 0,35° ;

_ à -5 $\mu$m de l'extrême surface, L.I. (brossé) - L.I. (non brossé) > 0,05°, préférentiellement > 0,1° et plus préférentiellement encore > 0,14° ;

avec L.I., la largeur intégrale à mi-hauteur du pic de diffraction mesurée par rayons X et exprimée en degré ; L.I. (brossé) est la largeur intégrale mesurée sur le produit laminé après l'étape de brossage et L.I. (non brossé) est la largeur intégrale mesurée sur le produit laminé avant l'étape de brossage ;

_ la contrainte résiduelle de compression dans le sens T en extrême surface du produit laminé à l'état brossé est au moins égale à -25 MPa, préférentiellement à - 45 MPa et, plus préférentiellement encore -50 MPa.

Selon un mode de réalisation avantageux, l'outil de brossage élimine une épaisseur au moins égale à 10 $\mu$m

de la surface du produit laminé non brossé, préférentiellement au moins égale à 15 μm. D'excellents résultats ont été obtenus selon ce mode de réalisation, notamment en termes de résistance à la corrosion de surface et ceci même dans un environnement particulièrement propice à la corrosion.

Dans un mode de réalisation de l'invention, adapté notamment aux tôles à l'état métallurgique T8, le brossage permet l'obtention d'une surface du produit laminé telle que :

la rugosité Ra dans les deux directions (L) et (T) du produit laminé brossé est inférieure ou égale à 1,5 μm ;
la rugosité Rz dans les deux directions (L) et (T) du produit laminé brossé est inférieure à 8 μm.

et de préférence telle que :

_ la rugosité Ra dans les deux directions (L) et (T) du produit laminé brossé est comprise entre 0,2 et 1,2 μm, préférentiellement entre 0,5 μm et 1,2 μm ;
_ la rugosité Rz dans les deux directions (L) et (T) du produit laminé brossé est comprise entre 1,3 et 8 μm, préférentiellement entre 1,5 et 8 μm, plus préférentiellement encore entre 2 et 8 μm.
Dans ce mode de réalisation, les présents inventeurs ont obtenus de très bons résultats, en particulier en termes de résistance à la fatigue des produits brossés qu'ils soient anodisés ou non.

Dans un autre mode de réalisation l'invention notamment adapté aux tôles à l'état métallurgique T3, le brossage permet l'obtention d'une surface du produit laminé telle que :

_ la rugosité Ra dans les deux directions (L) et (T) du produit laminé brossé est inférieure ou égale à 4 μm ;
_ la rugosité Rz dans les deux directions (L) et (T) du produit laminé brossé est inférieure à 17 μm.

et de préférence telle que :

_ la rugosité Ra dans les deux directions (L) et (T) du produit laminé brossé est comprise entre 0,5 et 3,5 μm, préférentiellement entre 1,0 μm et 3,0 μm ;
_ la rugosité Rz dans les deux directions (L) et (T) du produit laminé brossé est comprise entre 8 et 16 μm, préférentiellement entre 10 et 15 μm.

L'étape de brossage comprend au moins un brossage de type circulaire. Le brossage circulaire peut être un brossage circulaire et linéaire ou circulaire et orbital ou une combinaison de ces brossages. Avantageusement, le brossage est du type circulaire et orbital. En effet, les présents inventeurs ont constaté que la productivité du procédé est améliorée dans le cas du brossage circulaire et orbital.

Avantageusement le produit laminé brossé en alliage Al-Cu-Li d'épaisseur inférieure à 12 mm obtenu par le procédé selon l'invention présente notamment à l'état T8 :

_ une rugosité Ra dans les deux directions (L) et (T) du produit laminé brossé inférieure ou égale à 1,5 μm ;
_ une rugosité Rz dans les deux directions (L) et (T) du produit laminé brossé inférieure à 8 μm ;
et de préférence
_ une rugosité Ra dans les deux directions (L) et (T) du produit laminé brossé comprise entre 0,2 et 1,2 μm, préférentiellement entre 0,5 μm et 1,2 μm ;
_ une rugosité Rz dans les deux directions (L) et (T) du produit laminé brossé comprise entre 1,3 et 8 μm, préférentiellement entre 1,5 et 8 μm, plus préférentiellement encore entre 2 et 8 μm; et/ou
_ des contraintes résiduelles de surface dans le sens T telles que :

à l'extrême surface, la contrainte résiduelle est une contrainte de compression au moins égale à -25 MPa, préférentiellement à -45 MPa et, plus préférentiellement encore -50 MPa ;
à l'extrême surface, L.I. (brossé) > 1,5°, préférentiellement > 1,6° ;
à -5 μm de l'extrême surface, L.I. (brossé) > 01,4°, préférentiellement > 1,5° avec L.I., la largeur intégrale à mi-hauteur du pic de diffraction mesurée par rayons X et exprimée en degré ; et/ou

_ des oxydes de surface comprenant en tant qu'éléments majoritaires de l'oxygène et de l'aluminium, l'épaisseur de ces oxydes en surface du produit brossé étant inférieure à 1 μm, préférentiellement inférieure à 0,4 μm et plus préférentiellement encore inférieure à 0,2 μm.

Dans un autre mode de réalisation le produit laminé brossé en alliage Al-Cu-Li d'épaisseur inférieure à 12 mm obtenu par le procédé selon l'invention présente notamment à l'état T3 :

_ une rugosité Ra dans les deux directions (L) et (T) du produit laminé brossé inférieure ou égale à 4 $\mu$m ;
_ une rugosité Rz dans les deux directions (L) et (T) du produit laminé brossé inférieure à 17 $\mu$m.
et de préférence
_ une rugosité Ra dans les deux directions (L) et (T) du produit laminé brossé comprise entre 0,5 et 3,5 $\mu$m, préférentiellement entre 1,0 $\mu$m et 3,0 $\mu$m ;
_ une rugosité Rz dans les deux directions (L) et (T) du produit laminé brossé comprise entre 8 et 16 $\mu$m, préférentiellement entre 10 et 15 $\mu$m ; et/ou _ des contraintes résiduelles de surface dans le sens T telles que :

à l'extrême surface, la contrainte résiduelle est une contrainte de compression au moins égale à -25 MPa, préférentiellement à -45 MPa et, plus préférentiellement encore -50 MPa ;
à l'extrême surface, L.I. (brossé) > 1,5°, préférentiellement > 1,6° ;
à -5 $\mu$m de l'extrême surface, L.I. (brossé) > 01,4°, préférentiellement > 1,5° avec L.I., la largeur intégrale à mi-hauteur du pic de diffraction mesurée par rayons X et exprimée en degré ; et/ou
_ des oxydes de surface comprenant en tant qu'éléments majoritaires de l'oxygène et de l'aluminium, l'épaisseur de ces oxydes en surface du produit brossé étant inférieure à 1 $\mu$m, préférentiellement inférieure à 0,4 $\mu$m et plus préférentiellement encore inférieure à 0,2 $\mu$m.

De tels produits présentent à la fois d'excellentes propriétés de résistance à la corrosion de surface même lorsqu'il est soumis à un stockage de longue durée et / ou à un stockage dans des conditions de température et d'humidité particulièrement défavorables.

Le produit brossé selon l'invention présente des propriétés en fatigue améliorées par rapport à un produit identique non brossé, les deux produits étant à l'état anodisé ou non. Selon un mode de réalisation avantageux, le produit présente même des propriétés en fatigue améliorées par rapport à un produit identique non brossé, préférentiellement une valeur de contrainte moyenne $\sigma_A$ de rupture à 100 000 cycles supérieure à celle d'un produit identique non brossé.

Avantageusement le produit est une tôle et plus préférentiellement une tôle mince, plus préférentiellement encore une tôle mince de fuselage. Le produit peut donc avantageusement être utilisé dans un panneau de fuselage pour aéronef.

Ces aspects, ainsi que d'autres de l'invention sont expliqués plus en détails à l'aide des exemples illustratifs et non limitants suivants.

## Exemples

Tous les exemples ci-après ont été obtenus pour des tôles en alliage AA2198 de 3,1 mm d'épaisseur. Elles ont été préparées par un procédé comprenant les étapes de coulée, homogénéisation, laminage à chaud puis à froid, mise en solution et trempe, traction et optionnellement un revenu. Les tôles ayant subi un revenu sont dans un état métallurgique T8, plus précisément à l'état métallurgique T851 à l'issue dudit procédé alors que la tôle de l'essai 2c qui n'a pas subi de revenu est dans un état T3.

## Exemple 1

Différents types de traitement de surface ont été utilisés sur les tôles précédemment décrites, les paramètres de ces traitements sont détaillés dans le tableau 1 ci-après. Les tôles ainsi traitées ont été soumises à un test de corrosion en brouillard salin neutre (1h) selon la norme ASTM B117. L'absence de tâches de corrosion (« pitting ») sur la surface indique que les tôles passent le test de corrosion (test de corrosion indiqué « OK » dans le tableau 1).

Tableau 1

| Essai | Type de traitement | Epaisseur retirée par brossage ($\mu$m) | Test de corrosion (1h ASTM B117) |
|---|---|---|---|
| 1 | Aucun | 0 | No Ok |
| 14 | grenaillage | 0 | No Ok |
| 15 | Brossage Circulaire et orbital | 5 | No OK |
| 16 | Brossage Circulaire et orbital | 8 | No OK |
| 17 | Brossage Circulaire et orbital | 10 | Ok |

(suite)

| Essai | Type de traitement | Epaisseur retirée par brossage ($\mu$m) | Test de corrosion (1h ASTM B117) |
|---|---|---|---|
| 2 | Brossage Circulaire et orbital | 20 | Ok |
| 2c | Brossage Circulaire et orbital | 20 | Ok |
| 8 | Brossage Circulaire et linéaire | 50 | Ok |
| 10 | Brossage Circulaire et linéaire | 70 | Ok |
| 11 | Brossage Linéaire | 40 | Ok |

Les exemples pour lesquels l'épaisseur retirée est conforme à l'invention présentent un résultat satisfaisant au test de corrosion.

**Exemple 2**

Le tableau 2 présente les propriétés en fatigue (Kt = 1) de tôles pour lesquelles l'épaisseur retirée est conforme à l'invention. L'impact de différents types de brossage a été étudié : absence de brossage ou brossage linéaire, circulaire et linéaire, circulaire et orbital. La fatigue a été évaluée, telle que décrit précédemment directement dans la description, après brossage et après un traitement d'anodisation tel que décrit dans la présente demande. La rugosité (Ra et Rz) a été également mesurée selon la méthode décrite précédemment.

Tableau 2

| | | Produit non anodisé | Produit anodisé | Paramètres de rugosité obtenus par interférométrie (P=0.90) | | | |
|---|---|---|---|---|---|---|---|
| | | Direction T-L | Direction T-L | L | | TL | |
| Essai | Type de brossage | $\sigma 10^5$ cycles | $\sigma 10^5$ cycles | Ra | Rz | Ra | Rz |
| | | MPa | MPa | $\mu$m | $\mu$m | $\mu$m | $\mu$m |
| 1 | Aucun | 341 | 305 | 0,2 | 0,2 | 0,6 | 3,4 |
| 2 | Circulaire et orbital | 381 | 309 | 1,1 | 7,0 | 1,1 | 6,4 |
| 2c | Circulaire et orbital | 375 | 316 | 2,8 | 13,9 | 2,8 | 13,3 |
| 7 | Circulaire et orbital | 358 | 315 | 1,0 | 5,9 | 0,9 | 5,7 |
| 8 | Circulaire et linéaire | 385 | 336 | 0,3 | 2,2 | 0,7 | 5,5 |
| 11 | Linéaire | 225 | 200 | 1,4 | 8,6 | 3,1 | 20,8 |
| 12 | Linéaire | 248 | 217 | 0,4 | 3,2 | 1,0 | 8,4 |
| 13 | Linéaire | 290 | 250 | 0,3 | 2,2 | 0,5 | 4,1 |

Les essais dans lesquels un brossage de type circulaire est réalisé présentent une performance en fatigue améliorée, avec notamment une valeur de contrainte moyenne $\sigma_A$ de rupture à 100 000 cycles supérieure à celle d'un produit identique non brossé.

**Exemple 3**

Les contraintes résiduelles de surface sur d'une tôle non brossée et d'une tôle brossée (combinaison d'un brossage circulaire et d'un brossage orbital) ont été évaluées selon la méthode décrite précédemment dans la présente demande. Les contraintes de compression dans les sens T ont été évaluées dans l'épaisseur des tôles de l'extrême surface et jusqu'à -50 μm de l'extrême surface. La zone affectée par la déformation plastique induite par le brossage est corrélée à l'augmentation de la largeur intégrale de pic de diffraction L.I.

Tableau 3

| Essai | Type de brossage | Position à partir de l'extrême surface (μm) | Contraintes résiduelles par DRX | |
| | | | Contraintes sens T | Largeur Intégrale (L.I.) sens T |
| | | | MPa | degré ° |
| 1 | aucun | 0 | -7,0 | 1,3 |
| | | -5 | -5,0 | 1,3 |
| | | -10 | -43,0 | 1,3 |
| | | -20 | -23,0 | 1,4 |
| | | -50 | -43,0 | 1,4 |
| 2 | circulaire et orbital | 0 | -68,0 | 1,7 |
| | | -5 | -77,0 | 1,6 |
| | | -10 | -106,0 | 1,4 |
| | | -20 | -68,0 | 1,3 |
| | | -50 | -39,0 | 1,4 |
| 2c | circulaire et orbital | 0 | -59,0 | 1,7 |
| | | -5 | -71,0 | 1,5 |
| | | -10 | -60,0 | 1,4 |
| | | -20 | -10,0 | 1,4 |
| | | -50 | -24,0 | 1,4 |
| 11 | linéaire | 0 | -139,0 | 2,5 |
| | | -5 | -109,0 | 2,2 |
| | | -10 | -139,0 | 2,2 |
| | | -20 | -25,0 | 2,0 |
| | | -50 | -25,0 | 1,7 |

**Revendications**

1. Procédé de fabrication d'un produit laminé brossé en alliage Al-Cu-Li d'épaisseur inférieure à 12 mm comprenant une étape de brossage telle que l'outil de brossage :

_ génère des contraintes résiduelles de compression en surface du produit brossé ;
_ élimine une épaisseur au moins égale à 9 μm de la surface du produit laminé non brossé,

dans lequel l'étape de brossage comprend au moins un brossage de type circulaire où l'axe de rotation autour duquel tourne la brosse est perpendiculaire au plan brossé.

2. Procédé selon la revendication 1 comprenant, préalablement à l'étape de brossage, les étapes :

_ élaboration d'un produit laminé ;
_ mise en solution et trempe ;

_ détensionnement préférentiellement par traction ;
_ optionnellement revenu.

**3.** Procédé selon la revendication 1 ou 2 tel que la force appliquée sur le produit laminé lors de l'étape de brossage génère des contraintes résiduelles de compression jusqu'à une épaisseur d'au moins 5 $\mu$m, préférentiellement au moins 10 $\mu$m de l'extrême surface du produit à l'état brossé.

**4.** Procédé selon l'une quelconque des revendications précédentes tel que l'outil de brossage élimine une épaisseur au moins égale à 10 $\mu$m de la surface du produit laminé non brossé, préférentiellement au moins égale à 15 $\mu$m.

**5.** Procédé selon l'une quelconque des revendications précédentes tel que l'outil de brossage permet l'obtention d'une surface dudit produit laminé telle que :

_ la rugosité Ra dans les deux directions (L) et (T) du produit laminé brossé est inférieure ou égale à 1,5 $\mu$m ;
_ la rugosité Rz dans les deux directions (L) et (T) du produit laminé brossé est inférieure à 8 $\mu$m, et de préférence

_ la rugosité Ra dans les deux directions (L) et (T) du produit laminé brossé est comprise entre 0,2 et 1,2 $\mu$m, préférentiellement entre 0,5 $\mu$m et 1,2 $\mu$m ;
_ la rugosité Rz dans les deux directions (L) et (T) du produit laminé brossé est comprise entre 1,3 et 8 $\mu$m, préférentiellement entre 1,5 et 8 $\mu$m, plus préférentiellement encore entre 2 et 8 $\mu$m.

**6.** Procédé selon l'une quelconque des revendications 1 à 5 tel que l'outil de brossage permet l'obtention d'une surface dudit produit laminé telle que :

_ la rugosité Ra dans les deux directions (L) et (T) du produit laminé brossé est inférieure ou égale à 4 $\mu$m ;
_ la rugosité Rz dans les deux directions (L) et (T) du produit laminé brossé est inférieure à 17 $\mu$m, et de préférence
_ la rugosité Ra dans les deux directions (L) et (T) du produit laminé brossé est comprise entre 0,5 et 3,5 $\mu$m, préférentiellement entre 1,0 $\mu$m et 3,0 $\mu$m ;
_ la rugosité Rz dans les deux directions (L) et (T) du produit laminé brossé est comprise entre 8 et 16 $\mu$m, préférentiellement entre 10 et 15 $\mu$m.


**Patentansprüche**

**1.** Verfahren zur Herstellung eines gebürsteten Walzprodukts aus einer Al-Cu-Li-Legierung mit einer Stärke von weniger als 12 mm, einen Schritt des Bürstens sowie das Bürstwerkzeug umfassend:

- erzeugt Restdruckspannungen auf der Oberfläche des gebürsteten Produkts;
- entfernt eine Stärke von mindestens 9 $\mu$m von der Oberfläche des nicht gebürsteten Walzprodukts,

wobei der Schritt des Bürstens mindestens ein kreisförmiges Bürsten umfasst, wobei die Rotationsachse, um die sich die Bürste dreht, senkrecht zur gebürsteten Ebene steht.

**2.** Verfahren nach Anspruch 1, vor dem Schritt des Bürstens die Schritte umfassend:

- Ausarbeitung eines Walzprodukts;
- Lösungsglühen und Abschrecken;
- Entspannung, vorzugsweise durch Traktion;
- optional, Anlassen.

**3.** Verfahren nach Anspruch 1 oder 2, wobei die Kraft, die während des Schritts des Bürstens auf das Walzprodukt ausgeübt wird, Restdruckspannungen bis zu einer Stärke von mindestens 5 $\mu$m erzeugt, vorzugsweise mindestens 10 $\mu$m ab der äußersten Oberfläche des Produkts im gebürsteten Zustand.

**4.** Verfahren nach einem der vorhergehenden Ansprüche, wobei das Bürstwerkzeug eine Stärke von mindestens 10 $\mu$m von der Oberfläche des nicht gebürsteten Walzprodukt entfernt, vorzugsweise von mindestens 15 $\mu$m.

**5.** Verfahren nach einem der vorhergehenden Ansprüche, wobei das Bürstwerkzeug das Erlangen einer Oberfläche des Walzprodukts ermöglicht, so dass:

- die Rauheit Ra in den zwei Richtungen (L) und (T) des gebürsteten Walzprodukts kleiner oder gleich 1,5 $\mu$m ist;
- die Rauheit Rz in den zwei Richtungen (L) und (T) des gebürsteten Walzprodukts kleiner als 8 $\mu$m ist, und bevorzugterweise
- die Rauheit Ra in den zwei Richtungen (L) und (T) des gebürsteten Walzprodukts zwischen 0,2 und 1,2 $\mu$m liegt, vorzugsweise zwischen 0,5 $\mu$m und 1,2 $\mu$m;
- die Rauheit Rz in den zwei Richtungen (L) und (T) des gebürsteten Walzprodukts zwischen 1,3 und 8 $\mu$m liegt, vorzugsweise zwischen 1,5 und 8 $\mu$m, noch bevorzugter zwischen 2 und 8 $\mu$m.

6. Verfahren nach einem der Ansprüche 1 bis 5, wobei das Bürstwerkzeug das Erlangen einer Oberfläche des Walzprodukts ermöglicht, so dass:

- die Rauheit Ra in den zwei Richtungen (L) und (T) des gebürsteten Walzprodukts kleiner oder gleich 4 $\mu$m ist;
- die Rauheit Rz in den zwei Richtungen (L) und (T) des gebürsteten Walzprodukts kleiner als 17 $\mu$m ist, und bevorzugterweise
- die Rauheit Ra in den zwei Richtungen (L) und (T) des gebürsteten Walzprodukts zwischen 0,5 und 3,5 $\mu$m liegt, vorzugsweise zwischen 1,0 $\mu$m und 3,0 $\mu$m;
- die Rauheit Rz in den zwei Richtungen (L) und (T) des gebürsteten Walzprodukts zwischen 8 und 16 $\mu$m liegt, vorzugsweise zwischen 10 und 15 $\mu$m.

## Claims

1. Method for manufacturing a brushed rolled product made of an Al-Cu-Li alloy having a thickness of less than 12mm comprising a step of brushing such that the brushing tool:

   - generates residual compression stresses at the surface of the brushed product;
   - eliminates a thickness at least equal to 9$\mu$m of the surface of the non-brushed rolled product,

   wherein the brushing step comprises at least one brushing of the circular type, the axis of rotation about which the brush rotates is perpendicular to the brushed plane.

2. Method according to claim 1 comprising, before the brushing step, the steps:

   - creation of a rolled product;
   - solution heat treatment and quenching;
   - stress relief preferably by stretching;
   - optionally aging.

3. Method according to claim 1 or 2 such that the force applied onto the rolled product during the brushing step generates residual compression stresses up to a thickness of at least 5$\mu$m, preferably at least 10$\mu$m from the extreme surface of the product in the brushed state.

4. Method according to any one of the previous claims such that the brushing tool eliminates a thickness at least equal to 10$\mu$m of the surface of the non-brushed rolled product, preferably at least equal to 15$\mu$m.

5. Method according to any one of the previous claims such that the brushing tool allows to obtain a surface of said rolled product such that:

   - the roughness Ra in the two directions (L) and (T) of the brushed rolled product is less than or equal to 1.5$\mu$m;
   - the roughness Rz in the two directions (L) and (T) of the brushed rolled product is less than 8$\mu$m, and preferably
   - the roughness Ra in the two directions (L) and (T) of the brushed rolled product is between 0.2 and 1.2$\mu$m, preferably between 0.5$\mu$m and 1.2$\mu$m;
   - the roughness Rz in the two directions (L) and (T) of the brushed rolled product is between 1.3 and 8$\mu$m, preferably between 1.5 and 8$\mu$m, even more preferably between 2 and 8$\mu$m.

6. Method according to any one of claims 1 to 5 such that the brushing tool allows to obtain a surface of said rolled product such that:

- the roughness Ra in the two directions (L) and (T) of the brushed rolled product is less than or equal to $4\mu m$;
- the roughness Rz in the two directions (L) and (T) of the brushed rolled product is less than $17\mu m$, and preferably
- the roughness Ra in the two directions (L) and (T) of the brushed rolled product is between 0.5 and $3.5\mu m$, preferably between $1.0\mu m$ and $3.0\mu m$;
- the roughness Rz in the two directions (L) and (T) of the brushed rolled product is between 8 and $16\mu m$, preferably between 10 and $15\mu m$.

Figure 1

Figure 2a

Figure 2b

Figure 2c

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013054013 A
- US 2009029631 A
- DE 102010043285
- US 5791009 A

**Littérature non-brevet citée dans la description**

- **NAZIDA SIDHOM et al.** Effects of Brushing and Shot-Peening Residual Stresses on the Fatigue Résistance of Machined Métal Surfaces : Experimental and predicting Approaches. *Materials Science Forum,* 2011, vol. 681, 290-295